# EUROPEAN PATENT APPLICATION

(11) **EP 3 517 834 A1**
(43) Date of publication of application: **31.07.2019**
(21) Application number: 18382050.5
(22) Date of filing: 29.01.2018
(51) Int. Cl.: F21S 45/50, B60Q 1/00

(54) **HOUSING FOR AN AUTOMOTIVE LUMINOUS DEVICE AND HOUSING CAP**

(71) Applicant: Valeo Iluminacion, 23600 Martos (ES)
(72) Inventor: GUTIERREZ, Daniel-Jesus, 23600 Martos (ES); CONTRERAS-CONDE, Antonio, 23600 Martos (ES)
(74) Representative: Valeo Vision

(57) **Abstract**

This invention is related to a housing (10) for an automotive luminous device, the housing comprising a main body (11) suitable for housing lighting elements and a closing portion (12) which defines a hole (18) intended to be closed by a cap by a threading couple. This closing portion (12) comprises a contacting surface (13), intended to press a gasket against the cap, the contacting surface (13) comprising at least a portion of a frustoconical surface (19) obtained by rotating a contacting line non-parallel to a hole symmetry axis (14) around the hole symmetry axis. The contacting surface (13) forms an angle with respect to the hole symmetry axis (14) comprised between 20 and 70 degrees. The invention also refers to a cap for coupling to the housing and to an automotive luminous device comprising such an assembly.

## Description

### TECHNICAL FIELD

This invention is related to the field of automotive luminous devices, and to watertightness inside the luminous devices.

### STATE OF THE ART

When in operation, the majority of the headlamps must be watertight. Watertight requirements may be imposed by official regulations of by the automotive manufacturer. Sometimes the luminous device housing is made out of a single piece, so there are not any holes therein. In other cases, this watertightness is provided by a seal joint in the cap that closes a service hole.

Some caps have problems when being closed: the seal does not stay in the optimum place to ensure watertightness and the quality of the result is aleatory.

### DESCRIPTION OF THE INVENTION

The invention provides a solution for this problem by means of a housing for an automotive luminous device according to claim 1 and a housing cap according to claim 5. Preferred embodiments of the invention are defined in dependent claims.

In an inventive aspect, the invention provides a housing for an automotive luminous device. This housing comprises main body suitable for housing lighting elements and a closing portion which defines a hole intended to be closed by a cap by a threaded coupling, and the closing portion comprises a contacting surface, intended to press a gasket against the cap, the contacting surface comprising at least a portion of a frustoconical surface obtained by rotating a contacting line non-parallel to a hole symmetry axis around the hole symmetry axis. The contacting surface forms an angle with respect to the hole symmetry axis comprised between 20 and 70 degrees.

This invention is referred to a housing for a luminous device. This luminous device may by a lighting device or a signalling device, for example a headlamp, a fog lamp, a rear lamp, a DRL (daytime running lamp), a turn indicator, etc.

The advantage of this portion of frustoconical surface is that it is configured to press the gasket against the cap with a force that has a component in the direction of the hole symmetry axis and another component in a direction perpendicular to the hole symmetry axis, therefore improving watertightness. The contact surface between the gasket and the closing portion of the housing is greater than in the known solutions, and the torque needed to couple the cap to the housing by threading is reduced.

Obviously, the line non-parallel to the hole symmetry axis does not need to be a straight line; a portion of a frustoconical surface made out of a curved line is also within the scope of this invention.

In some particular embodiments, the contacting surface forms an angle with respect to the hole symmetry axis comprised between 30 and 60 degrees, and more preferably, between 40 and 50 degrees.

These ranges provide the best watertightness response in the housing, since it is adapted to press the gasket against the cap with similar components in the axial and radial directions. Required closing torque is low and watertightness is high.

In some particular embodiments, the contacting surface comprises a first edge closer to the inner surface of the housing and a second edge farther from the inner surface of the housing, so that the first edge has a greater diameter than the second edge.

The inclination is so that the upper edge is nearer the symmetry axis than the lower edge. This causes a force against the part of the cap with smaller diameter, so that a cap which is manufactured to be kept in this position (with a smaller nominal diameter to adjust to the smaller diameter side) is in the right position to be pressed.

In some particular embodiments, the contacting surface further comprises an annular protrusion, which protrudes from an edge of the contacting surface, the annular protrusion being obtained by rotating a protrusion line parallel to the hole symmetry axis around the hole symmetry axis.

This additional protrusion helps to retain the gasket in the correct position, avoiding that it is entangled by the upper portion of the housing.

In a second inventive aspect, the invention provides a housing cap configured to cooperate with the housing according to the first inventive aspect. This cap comprises a cap closing cavity and a gasket intended to be housed in the cap closing cavity.

This housing cap is adapted to provide the housing watertightness in cooperation with the housing of the previous inventive aspect. When the cap is coupled to the housing by threading, the torque needed for performing this action is advantageously lower than in the caps known in the state of the art, due to the respective shape of the cap closing cavity and the contacting surface of the housing.

In some particular embodiments, the gasket is toroidal, the major radius being comprised between 70 and 160 mm and the minor radius being comprised between 2 and 8 mm.

The torus is deemed to be obtained by rotating a circle having a radius called minor radius around a symmetry axis, the distance between the centre of the circle and the symmetry axis being called major radius.

This shape has proved to be particularly advantageous, since the circular cross section fits better with the space provided by the contacting surface of the closing portion of the housing.

In some particular embodiments, the cap closing cavity is limited by a first annular wall with a first radius and a second annular wall with a second radius greater than the first radius, and the gasket, in its rest position, has a major radius lower than the first radius.

In these embodiments, the gasket is trapped inside the closing portion of the cap, and may not exit unnoticedly.

In some particular embodiments, the cap closing cavity comprises a rounded portion intended to receive the gasket when pressed by the closing portion of the housing.

This rounded portion is intended to adapt to the shape of the toroidal gasket, so that the deformation caused by the pressure of the contact portion of the contacting surface of the closing portion of the housing is used to fill the space between said elements.

In some particular embodiments, the rounded portion has a curvature radius comprised between 0.2 and 1.5 cm.

This range has proved to work advantageously well in the technical effect or receiving the toroidal gasket.

In some particular embodiments, the gasket is made of silicone. This is an advantageous material, suitable for sealing surfaces and easily adaptable when pressed.

In a further inventive aspect, the invention provides a housing assembly comprising a housing according to the first inventive aspect and a cap according to the second inventive aspect. Such a housing assembly is advantageously watertight and easy to close.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a cross section of a housing for an automotive luminous device according to the invention.
Figure 2 shows a cross section of a detailed view of the closing portion of a housing according to the invention.
Figure 3 shows a housing cap according to the invention before being coupled to the housing of the previous figure.
Figure 4 shows a cross section of a housing assembly according to the invention comprising the housing of Figure 1 and the housing cap of Figure 3.
Figure 5 shows a luminous device comprising a housing assembly installed in an automotive vehicle.

### DETAILED DESCRIPTION OF THE INVENTION

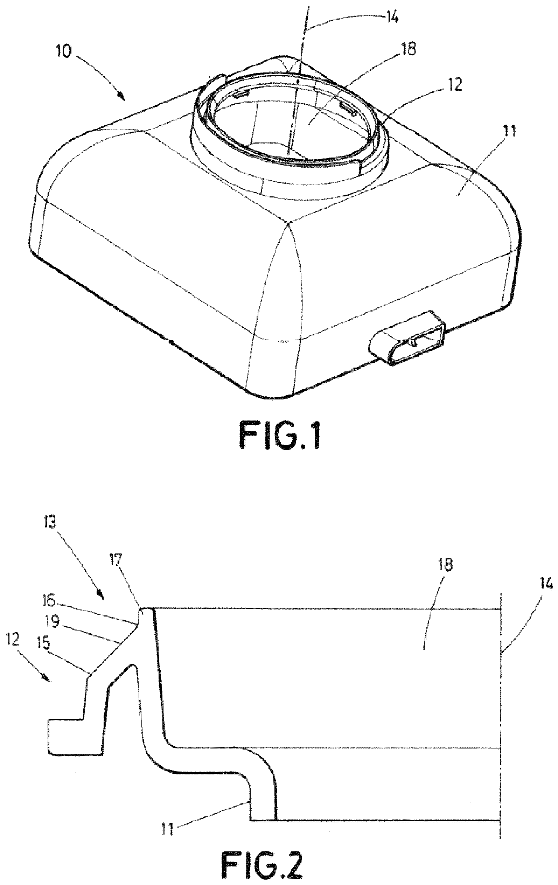

Figure 1 shows a cross section of a housing 10 for an automotive luminous device according to the invention. This housing 10 comprises a main body 11, which is suitable for housing the lighting elements inside, and a closing portion 12. The closing portion 12 defines a hole 18, thus offering a way of accessing the main body 11 when one of the lighting elements needs replacing. This closing portion 12 is intended to be closed by a suitable cap, as will be seen below. The hole 18, which is a substantially circular hole, defines a hole symmetry axis 14 as an axis crossing the centre of the hole 18 and being perpendicular to the main plane defined by the hole.

Figure 2 shows a cross section of a detailed view of the closing portion 12 of a housing 10 according to the invention.

The closing portion 12 comprises a contacting surface 13. This contacting surface 13 first comprises a frustoconical surface 19. This frustoconical surface 19 is obtained by rotating a contacting line non-parallel to the hole symmetry axis 14 around this hole symmetry axis 14. The contacting surface 13 forms an angle with respect to the hole symmetry axis 14 comprised between 42 and 48 degrees. This contacting surface 13 is intended to press a gasket against the cap, therefore obtaining the watertightness of the housing.

The contacting surface 13 comprises a first edge 15 closer to the main body 11 of the housing and a second edge 16 farther from the main body 11 of the housing, so that the first edge 15 has a greater diameter than the second edge 16.

The frustoconical surface 19 is therefore inclined in the sense that the direction perpendicular to the frustoconical surface 19 is not parallel to the hole symmetry axis 14, but points outside the hole 18 and outside the main body 11. This direction perpendicular to the frustoconical surface 19 will be the direction of the force exerted against the gasket and the cap when it closes the closing portion 12.

The contacting surface 13 further comprises an annular protrusion 17, which protrudes from the second edge 16 of the contacting surface 13. This annular protrusion 17 is obtained by rotating a protrusion line parallel to the hole symmetry axis 14 around the hole symmetry axis 14.

The contacting surface 13 is therefore composed of a frustoconical surface 19 and an annular protrusion 17. The effect of this composed contacting surface 13 is best seen in combination with the housing cap.

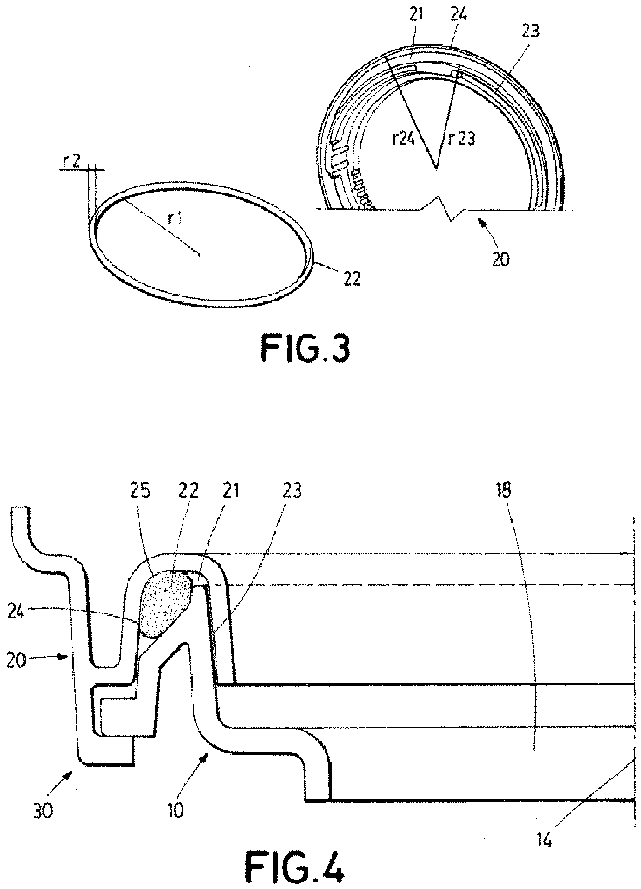

Figure 3 shows a housing cap 20 before being coupled to the housing 10 of the previous figure. This housing cap 20 comprises a cap closing cavity 21 and a gasket 22 intended to be housed in the cap closing cavity 21.

The gasket 22 is made of silicone and is toroidal in its rest position, the major radius r1 being comprised between 70 and 160 mm and the minor radius r2 being comprised between 2 and 8 mm.

The cap closing cavity 21 is limited by a first annular wall 23 with a first radius r23 and a second annular wall 24 with a second radius r24 greater than the first radius r23. The gasket 22, in its rest position, has a major radius r1 lower than the first radius r23, so it has to be extended to fit in the cap closing cavity 21, so that it does not separate from this cap closing cavity 21.

Figure 4 shows a cross section of a housing assembly 30 comprising the housing 10 of Figure 1 and the housing cap 20 of Figure 3.

The housing cap 20 comprises the gasket 22 housed in the cap housing cavity 21, and is coupled to the housing 10 by threading, so that the gasket 22 is compressed by the contacting portion 13 of the housing 10 against the cap housing cavity 21. This cap closing cavity 21 comprises a rounded portion 25 intended to receive the gasket 22 when pressed by the closing portion 12 of the housing 10.

The rounded portion has a curvature radius comprised between 0.2 and 1 cm, which is suitable for receiving the corresponding portion of the gasket 22.

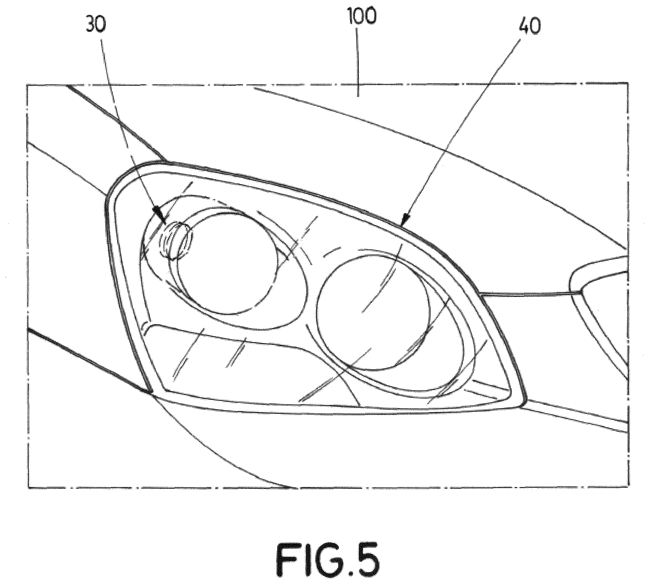

Figure 5 shows a luminous device 40 comprising a housing assembly 30 installed in an automotive vehicle 100.

## Claims

1. Housing (10) for an automotive luminous device, the housing comprising a main body (11) suitable for housing lighting elements and a closing portion (12) which defines a hole (18) intended to be closed by a cap by a threaded coupling, the closing portion (12) comprising
a contacting surface (13), intended to press a gasket against the cap, the contacting surface (13) comprising at least a portion of a frustoconical surface (19) obtained by rotating a contacting line non-parallel to a hole symmetry axis (14) around the hole symmetry axis;
wherein the contacting surface (13) forms an angle with respect to the hole symmetry axis (14) comprised between 20 and 70 degrees.

2. Housing according to claim 1, wherein the contacting surface (13) forms an angle with respect to the hole symmetry axis comprised between 30 and 60 degrees, and more preferably, between 40 and 50 degrees.

3. Housing (10) according to any of claims 1 or 2, the contacting surface (13) comprising a first edge (15) closer to the main body (11) of the housing (10) and a second edge (16) farther from the main body (11) of the housing (10), so that the first edge (15) has a greater diameter than the second edge (16).

4. Housing (10) according to claim 3, wherein the contacting surface (13) further comprises an annular protrusion (17), which protrudes from the second edge (16) of the contacting surface (13), the annular protrusion (17) being obtained by rotating a protrusion line parallel to the hole symmetry axis (14) around the hole symmetry axis (14).

5. Housing cap (20) configured to cooperate with the housing (10) according to any of preceding claims, the housing cap (20) comprising a cap closing cavity (21) and a gasket (22) intended to be housed in the cap closing cavity (21).

6. Housing cap (20) according to claim 5, wherein the gasket (22) is toroidal, the major radius (r1) being comprised between 70 and 160 mm and the minor radius (r2) being comprised between 2 and 8 mm.

7. Housing cap (20) according to claim 6, wherein the cap closing cavity (21) is limited by a first annular wall (23) with a first radius (r23) and a second annular wall (24) with a second radius (r24) greater than the first radius (r23), and the gasket (22), in its rest position, has a major radius (r1) lower than the first radius (r23).

8. Housing cap (20) according to any of claims 5 to 7, wherein the cap closing cavity (21) comprises a rounded portion (25) intended to receive the gasket (22) when pressed by the closing portion (12) of the housing (10).

9. Housing cap (20) according to claim 8, wherein the rounded portion has a curvature radius comprised between 0.2 and 1.5 cm.

10. Housing cap (20) according to any of claims 5 to 9, wherein the gasket (22) is made of silicone.

11. Housing assembly (30) comprising a housing (10) according to any of claims 1 to 4 and a housing cap (20) according to claims 5 to 10, the housing cap (20) being suitable for being coupled by threading to the housing (10).

12. Automotive luminous device (40) comprising a housing assembly (30) according to claim 11.
